# EUROPEAN PATENT APPLICATION

(11) **EP 1 256 736 A1**
(43) Date of publication of application: **13.11.2002**
(21) Application number: 02009828.1
(22) Date of filing: 02.05.2002
(51) Int. Cl.: F16D 13/68, F16F 15/12

(54) **Driven plate for a friction clutch**

(30) Priority: 12.05.2001 GB 0111616
(71) Applicant: Automotive Products UK Limited, Leamington Spa, Warwickshire CV31 3ZL (GB)
(72) Inventor: Young, Alastair John, Kenilworth, Warwickshire, CV8 1DW (GB)
(74) Representative: Morrall, Roger

(57) **Abstract**

A driven plate (10) for a friction clutch has a hub (12), and an outer assembly (14) carrying at least one friction lining (26a,26b) arranged concentrically about the axis of rotation (15) of the hub. The hub is capable of limited rotational movement relative to the outer assembly and the driven plate further includes spring means (40) for resisting said relative rotational movement between the hub and the outer assembly. The hub (12) is also connected with the outer assembly (14) via linkages (42a,42b,42c) which act on the spring means (40) to change the loading on the spring means (40) non-linearly as the hub (12) rotates relative to the outer assembly (14).

## Description

The present invention relates to a driven plate for a friction clutch. In particular, but not exclusively, the present invention relates to a driven plate for use in the friction clutch of motor vehicle.

Known driven plates comprise a hub for mounting on a drive shaft, such as the input shaft of an associated vehicle transmission, and an outer assembly arranged concentrically about the axis of rotation of the hub. Typically, the outer assembly carries a pair of friction linings which in use are clamped between a pressure plate and a counter pressure plate of an associated clutch assembly.

It is also known for driven plates to have a torsion damper for absorbing shocks which may occur during clutch take-up and to dampen vibrations, such as those which arise in the drive line of a motor vehicle. In a typical arrangement, the driven plate is constructed so that the hub can move rotationally relative to the outer assembly against the bias force of one or more springs. The springs act to absorb the shocks and vibrations.

Typically a number of coil springs or sets of springs are arranged circumferentially about the driven plate. The springs will normally be located in aligned windows in a flange which rotates with the hub and a pair of side plates, arranged either side of the flange, which rotate with the outer assembly. The maximum range of relative rotational movement between the hub and the outer assembly is limited by the length of the springs which in turn is limited by the length of the windows. For a driven plate of any given diameter, the maximum length of window which can be used is determined by the dimensions of the drive'n plate and the need to maintain structural integrity.

In order for the damper to be able to cope with a variety of engine speeds and torque loading, it is often the case that the damper will comprise two or more sets of springs, with each set of springs having a different spring rate. Typically a first set of springs is brought into operation over a first range of relative movement between the hub and the outer assembly, with the second and successive sets being brought sequentially into play as the movement between the hub and the outer assembly moves beyond this first range. Whilst this arrangement works well it gives rise to sharp increases in the spring loading when the second and further sets of springs are brought into play.

In order to dampen low level vibrations which can occur in a vehicle drive line at engine idle speeds, known driven plates often have a separate idle damper or idle centre in addition to a main torsion damper. The idle centre usually comprises springs having a significantly lower spring rate than the springs of the main damper and is arranged to operate only over a small initial range of relative movement between the hub and the outer assembly before the main damper is brought into operation.

It is an objective of the present invention to provide an improved driven plate for a friction clutch.

It is a further objective of the present invention to provide an improved driven plate in which the maximum range of movement of the hub relative to the outer assembly is larger than that provided by known driven plates.

It is a further objective to provide a driven plate having a damper arrangement which is capable of damping acting both as a main torsion damper and an idle centre.

Thus in accordance with the present invention, there is provided a driven plate for a friction clutch, the driven plate comprising a hub, and an outer assembly carrying at least one friction lining arranged concentrically about the axis of rotation of the hub, the hub being capable of limited rotational movement relative to the outer assembly and the driven plate further comprising spring means for resisting said relative rotational movement between the hub and the outer assembly, the arrangement being such that, in use, the loading on the spring means changes non-linearly as the hub rotates relative to the outer assembly.

In a driven plate in accordance with the invention it can be arranged that loading of the spring means increases non-linearly as the hub moves relative to the outer assembly from a neutral position towards an end position which represents the maximum permitted range of movement between the hub and the outer assembly.

In a particularly preferred embodiment, the hub and outer assembly are connected by means of at least one linkage. The spring means may comprise a spring associated with the or each linkage and the arrangement may be such that said relative rotational movement between the hub and the outer assembly causes the or each linkage to act on its respective spring , changing the spring loading. Preferably, the change in spring loading is related to the amount of said relative rotational movement by a non-linear function.

Other advantageous features of the invention are defined in the dependant claims.

Several embodiments of the invention will now be described, by way of example only, with reference to the following drawings in which:
Figure 1 is an axial view of a first embodiment of a driven plate in accordance with the invention taken in the direction of arrow A on Figure 2;
Figure 2 is a cross-sectional view of the driven plate of Figure 1 taken on the line X-X;
Figure 3 is a perspective view of the driven plate of Figure 1 taken in the general direction of arrow B on Figure 2 with one of the side plates removed for clarity;
Figure 4 is an exploded view of the driven plate of Figure 1;
Figure 5 is a graph showing driven plate torque against deflection for the driven plate of Figure 1;
Figure 6 is a view similar to that of Figure 1 showing a second embodiment of a driven plate in accordance with the invention;
Figure 7 is cross sectional view of the driven plate of Figure 6, taken on the line X-X;
Figure 8 is a perspective view of the driven plate of Figure 6 taken in the general direction of arrow B on Figure 7 with one of the side plates removed for clarity;
Figure 9 is a view similar to that of Figure 8 but showing a cross section through the linkages and the spring means of the driven plate;
Figure 10 is a graph similar to that of Figure 5 but showing driven plate torque against deflection for the drive plate of Figure 6;
Figure 11 is a perspective view of a third embodiment of a driven plate in accordance with the invention;
Figure 12 is a view similar to that of Figure 11 but with one of the side plates removed; and
Figure 13 is a graph showing driven plate torque against deflection for the drive plate of Figure 11.

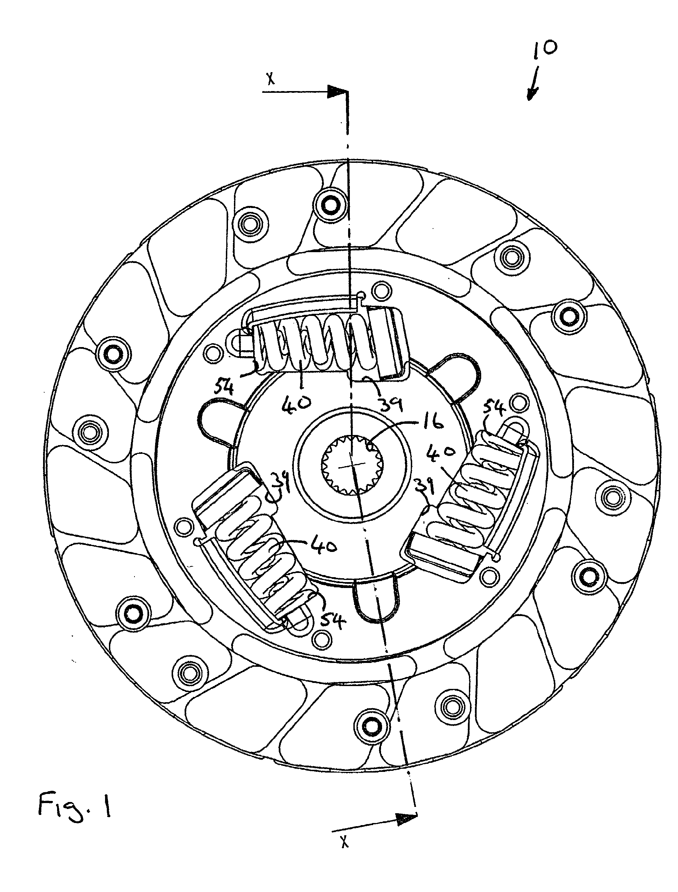

With reference to Figures 1 to 4, a driven plate for a friction clutch of a motor vehicle is indicated generally at 10. The driven plate comprises a hub 12 and an outer assembly 14 arranged concentrically about the axis of rotation 15 of the hub.

The hub 12 has a central bore with internal splines 16 for mounting to a shaft (not shown) of an associated transmission of the vehicle. The outer diameter of the hub 12 has a central, radial flange 18 from which protrude three radially extending, equi-spaced, lugs 20. The outer diameter surface of the hub is also recessed 22 on either side of the central flange 18 to provide axial faces 24.

The outer assembly 14 comprises a pair of friction linings 26a, 26b, an annular spring segment 28, and a pair of side plates 30a, 30b.

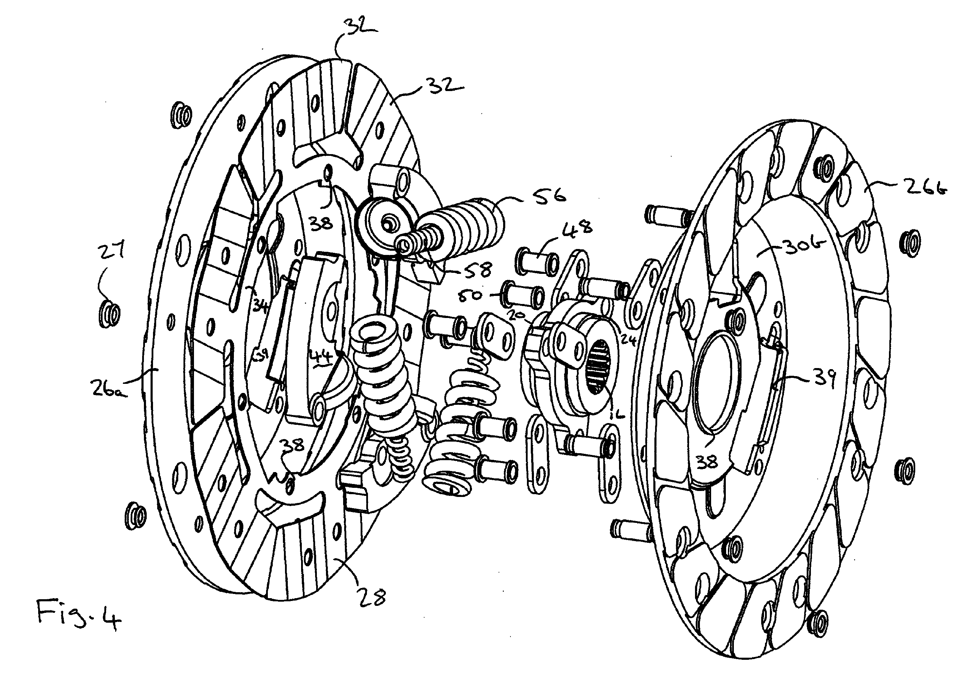

As can be seen best in Figure 4, spring segment 28 has six segment portions 32 equi-spaced around its circumference to which the friction linings 26a, 26b are attached by rivets 27. In a manner well known in the art, each segment portion 32 is crimped in an axial direction so that the linings are biased axially apart by a limited amount to provided cushioning of the friction linings during clutch engagement. Each of the segment portions 32 is attached to an inner ring-like, planar portion 34 of the spring segment.

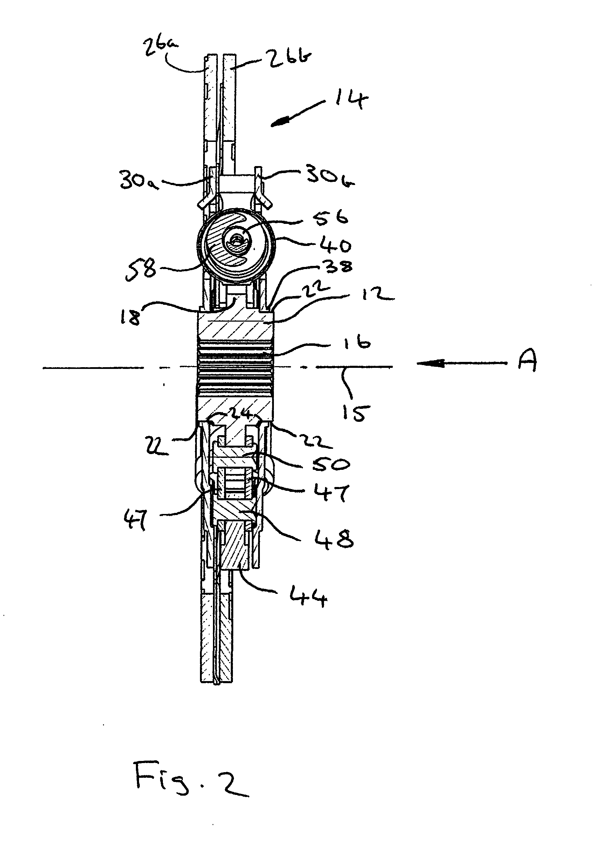

The side plates 30a, 30b are connected together and to the ring-like portion 34 of the spring segment by means of rivets 36a, 36b which are received in holes 38 in the ring-like portion 34. A first of the side plates 30a is attached to the left hand (as viewed in Figure 2) face of the ring like portion 34. The other side plate 30b is spaced from the right hand face of the ring like portion 34 by the rivets 36a, 36b.

Each of the side plates 30a, 30b is generally annular in shape and has an inner axial lip 38 for engagement with a respective recessed portion 22 of the hub 12. The axially inner face of one of the side plates 30b can be arranged to abut with a respective one of the axial faces 24 on the outer surface of the hub. Each side plate also has three circumferentially, equi-spaced windows 39 which align with corresponding windows in the other of the side plates for receiving a spring means 40.

The outer assembly 14 is connected to the hub 12 by means of three linkages 42a, 42b, 42c arranged between the two side plates 30a, 30b. All of the linkages are the same and so only one linkage will be described in detail.

Linkage 42a comprises a first link member 44 that is pivotably attached to the ring-like portion 34 of the segment 28 and the side plates 30a, 30b by means of one of the rivets 36a which connect the side plates and the segment. The first link member 44 is connected to the hub by means of a second link member 46, which in this case is in the form of a pair of parallel, spaced links 47 arranged one on either side of the first link member 44. A first end of the links 47 is pivotably attached to a recessed portion 45 of the first link member 44 by means of a rivet 48, whilst the other end of the links 47 is similarly attached, by means of a rivet 50, to one of the radially extending lugs 20 on the hub.

The first link member 44 also comprises a spring retaining portion 52, that engages a first end of a spring means 40. The other end of the spring means 40 being in engagement with an abutment 54 formed by the end portions of aligned windows 39 in the side plates 30a, 30b. In the present embodiment each of the spring means 40 comprises a pair of concentric coil springs 56, 58.

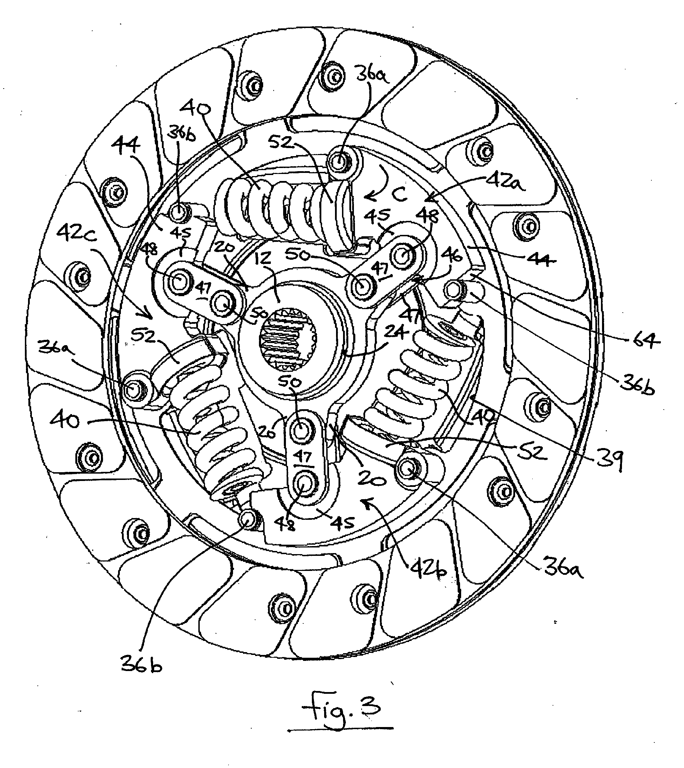

The arrangement is such that when the hub 12 rotates relative to the outer assembly 14 from a neutral position (as shown in Figure 3), the first link member 44 is pivoted about the rivet 36a in a clockwise direction (as viewed - see arrow C) so as to compress the spring means 40. The geometry of the linkages is arranged so that initially, a large relative movement between the outer assembly and the hub away from the neutral position results in a comparatively small compression of the spring means 40. Hence the spring will be loaded only lightly. However, the amount by which the spring is compressed for a given amount of movement between the outer assembly and the hub increases as the outer assembly and hub move further relative to one another from the neutral position. Consequently the loading on the spring increases non-linearly as the outer assembly moves relative to the hub further from the neutral position.

Those skilled in the art will understand that the hub 12 can rotate relative to the outer assembly 14 in either direction from the neutral position depending on whether the driven plate is being operated under drive or overrun conditions. Thus, if the normal direction of rotation of the driven plate is in the direction of arrow D as shown in Figure 3, then under drive conditions, that is when torque is being transmitted from the outer assembly to the hub, the hub will tend to rotate in a clockwise direction (as viewed in Figure 3) relative to the outer assembly. However, when the driven plate is being operated in overrun conditions, that is when torque is being transmitted from the hub to the outer assembly, the hub will tend to rotate anti-clockwise (as viewed) relative to the outer assembly. The geometry of the linkage assembly can be arranged such that spring means is loaded differently under drive conditions than under overrun conditions.

In the present embodiment, the first link member 44 has significant mass such that it acts like a bob weight. As a result, when the driven plate is rotated at speed, centrifugal force acting on the first link member 44 will tend to pivot it anti-clockwise (as viewed in Figure 3) about the rivet 36a. Thus, resistance to relative rotational movement between the hub 12 and the outer assembly 14 increases as the speed of rotation of the driven plate increases. As a result, the torsion damping characteristics of the driven plate 10 are sensitive to its speed of rotation.

Of course, it will be understood that if speed sensitivity is not required, then the first link member 44 could be made of minimal mass.

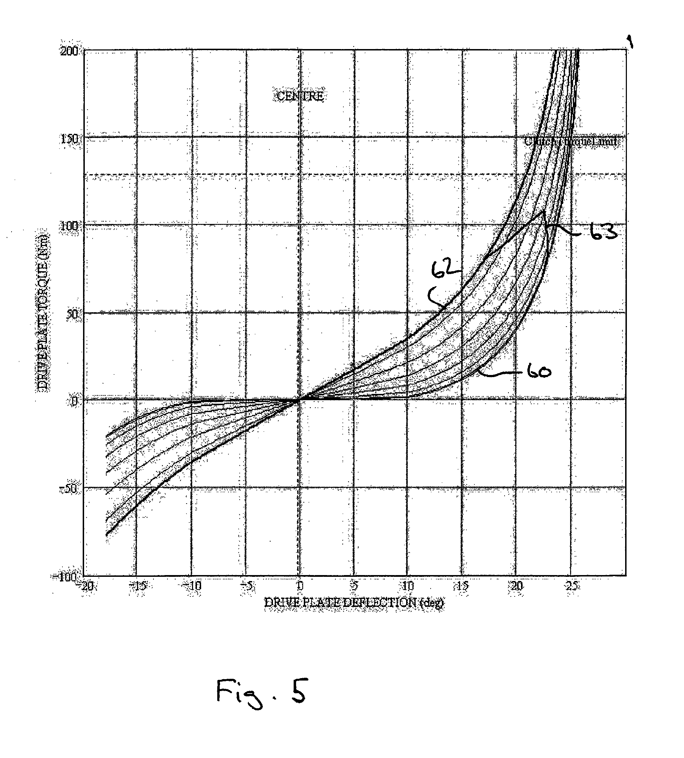

Figure 5 is a graph showing driven plate torque against deflection. In this graph, driven plate torque is the torque required to rotate the hub 12 relative to the outer assembly 14 against the bias force of the spring means 40 and the centrifugal forces acting on the first link members 44, whilst deflection is indicative of the rotational movement of the hub relative to the outer assembly. The neutral position of the driven plate is shown at 0 degrees with deflection under drive conditions shown to the right in positive degrees of rotation. Deflection under overrun conditions is shown to the left and is indicated by negative degrees of rotation.

The line 60 indicates the torque Vs deflection curve for driven plate 10 in the static condition. That is to say with no centrifugal effects. It can be seen from this curve that spring loading increases non-linearly with deflection. The line 62 indicates the torque Vs deflection curve of driven plate 10 at a rotational speed of 6,500 RPM. This curve shows how centrifugal force acting on the first link members 44 increases the torque required to rotate the hub relative to the outer assembly. Line 63 indicates the maximum engine torque achievable at the respective engine speeds.

By appropriate selection of the rate of the spring means 40, the geometry of the linkages 42, and the centrifugal effects on the first link 44, it can be arranged that the damping torque is low over an initial range of deflection, particularly when the speed of rotation is low, to provide for an idle centre effect to dampen out the low level vibrations which occur at idle speeds but with the damping torque increasing as the deflection and the speed of rotation increases so as to provide the higher levels of damping required to cater for shocks occurring during clutch take up and/or drive line vibrations arising at higher engine speeds.

From the graph it will be noted that in driven plate 10, the hub 12 is able to move by approximately 26 degrees relative to the outer assembly 14 under drive conditions and by approximately 18 degrees under overrun conditions. However, by suitable modification of the design, the range of movement in drive conditions can be increased to approximately 40 degrees and in overrun conditions to approximately 20 degrees. This compares to typical ranges of movement of 25 degrees in drive and 13 degrees in overrun for conventional driven plates.

The increased travel and the smooth characteristic curves 60, 62 of the damper are made possible by the use of linkages 42a, 42b, 42c which load the conventional linear coil springs 56, 58 non-linearly as the hub moves relative to the outer assembly.

The damping characteristics of the driven plate 10 can be further modified in a number of ways. For example, in the embodiment described, the concentric coil springs 56, 58 are arranged to be loaded simultaneously by the first link member 44 over the entire range of movement of the hub relative to the outer assembly. However, the springs could be arranged such that only the smaller spring 56 is loaded over an initial range of movement, with the second spring only coming in to play when the deflection exceeds this initial range, thus providing for a staged springing effect.

Alternatively or in addition, a limited amount of lost motion could be introduced so that no damping torque is produced by the linkages over an initial range relative movement between the hub and the outer assembly. This could be achieved, for example, by arranging for an end 64 of each of the first link members to contact an adjacent one of the rivets 30b when the driven plate is in the neutral position and providing a limited amount of free play in the connection between the first link members 44 and the hub 12. In this arrangement, no pivotal movement of the first link members 44 would take place until the free play was taken up. Free play could be provided, for example, at the connection between the first link member 44 and the second link member 46, i.e. at the rivet 48. Alternatively the free play could be provided at the connection between the second link member 46 and the hub 12, i.e. at the rivet 50.

Those skilled in the art will also understand that a friction damping device operative between the hub 12 and the outer assembly 14 could be provided to modify the damping characteristics of the driven plate. Friction damping could be provided between the side plates 30a, 30b and the hub 12, in which case the friction damper would generate a constant hysteresis effect over the full range of movement between the outer assembly and the hub. Alternatively, friction damping could be provided between the side plates and the first link member 44. In this case, the amount of hysteresis generated will vary non-linearly as the outer assembly moves relative to the hub.

An important feature of the driven plate 10 is that the spring means 40 and the linkage assemblies 42 provide for parallel paths along which torque can be transmitted between the hub 12 and the outer assembly 14. Over most of the range of relative movement between the hub and the outer assembly, torque will be predominantly transmitted via the spring means 40. However, as the hub approaches the end of its maximum permitted range of movement relative to the outer assembly, the first link members 44 and the second link members 46 will become generally aligned in a tangential sense relative to the hub so that torque can be transmitted between the hub and the outer assembly directly via the linkages.

In a further modification, the first link member 44 can be provided with an abutment (not shown) for contact with the hub 12 to limit the maximum range of relative movement between the hub and the outer assembly 14. In such an arrangement, torque will be transmitted between the hub and the outer assembly direct via the first link member when the abutment is in contact with the hub.

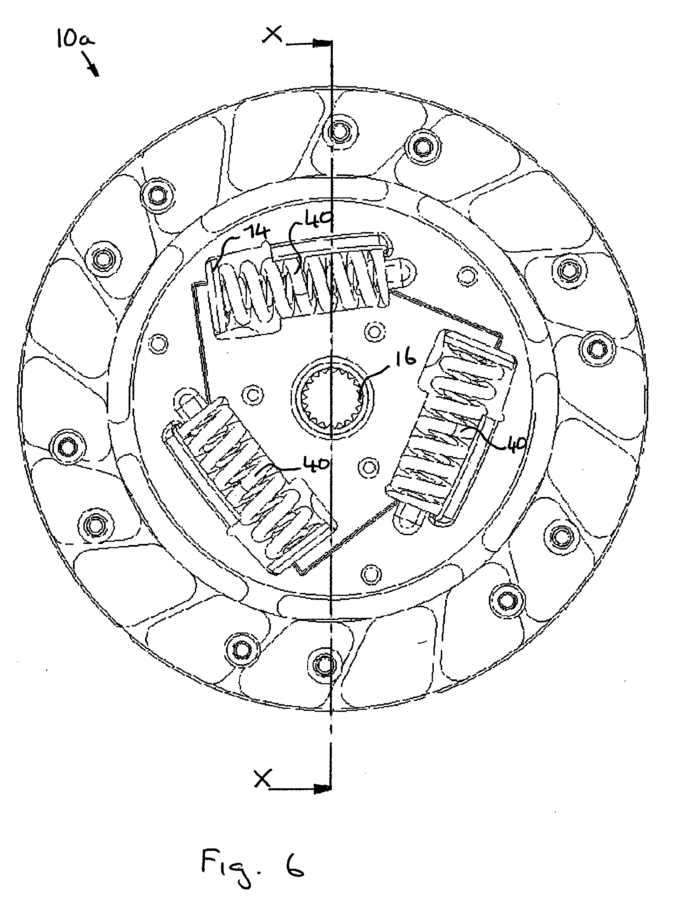

A second embodiment of a driven plate 10a in accordance with the invention is shown in Figures 6 to 9. The driven plate 10a is similar to the driven plate 10 described above in relation to Figures 1 to 5 and the same reference numerals have been used to denote components which perform the same function in either driven plate.

The main distinction between the driven plate 10a and the driven plate 10 lies in the arrangement of the linkages 42a, 42b, 42c and the spring means 40.

All the linkages are the same and so only one 42a will be described in detail.

Linkage 42a comprises a first link member 44 pivotably attached between the two side plates 30a, 30b and connected to the hub 12 by a second link member 46 in the form of a pair of spaced, parallel links 47.

First link member 44 comprises a main solid body portion 44a having a significant mass and a slotted portion which forms two spaced, parallel plate members 44b extending generally radially inwardly from the main body portion 44a. The first link member 44 is pivotably connected between the side plates 30a, 30b by means of a stepped rivet 36a. It will be noted that in this embodiment the rivets 36a are located radially inboard of the spring means 40.

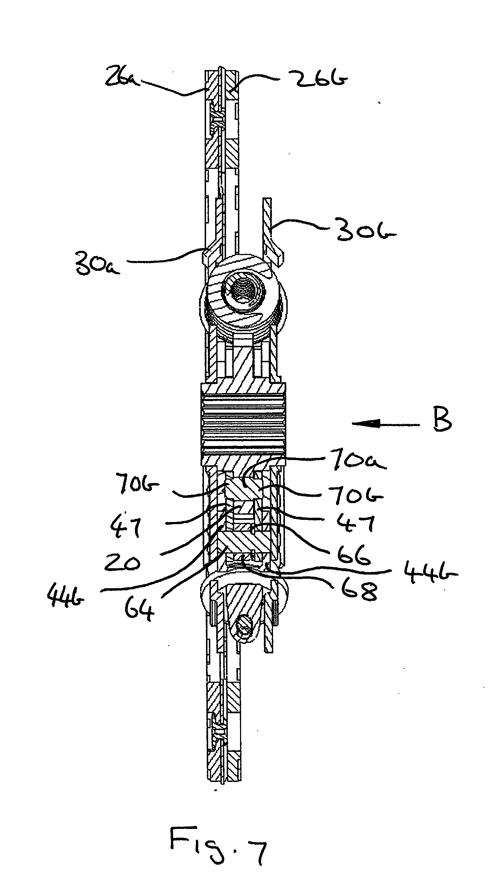

As can be seen best in Figure 7, the links 47 are located between the plate members 44b such that each link 47 abuts an inner face of one of the side plate members 44b. The links 47 are pivotably connected to the plate members by a pin 64 which extends through corresponding holes in the links 47 and the plate members 44b. The pin 64 is held in position by means of a circlip 66 that engages in a slot in the pin and is positioned adjacent to the inner face of one of links 47. A spacer 68 is located about the pin and extends between the circlip 66 and the inner surface of the other link 47, to keep the links parallel.

The links 47 are pivotably connected to a radial flange 20 on the hub by a further pin 70. Pin 70 has a larger diameter central portion 70a from which extends a smaller diameter trunnion 70b at either end. The larger diameter central portion is pivotably received in a corresponding hole in the flange 20 whilst each trunnion is pivotably received in a corresponding hole in one of the links 47. The links 47 are held on the flange 20 by means of their engagement with the inner surfaces of the plate members 44b.

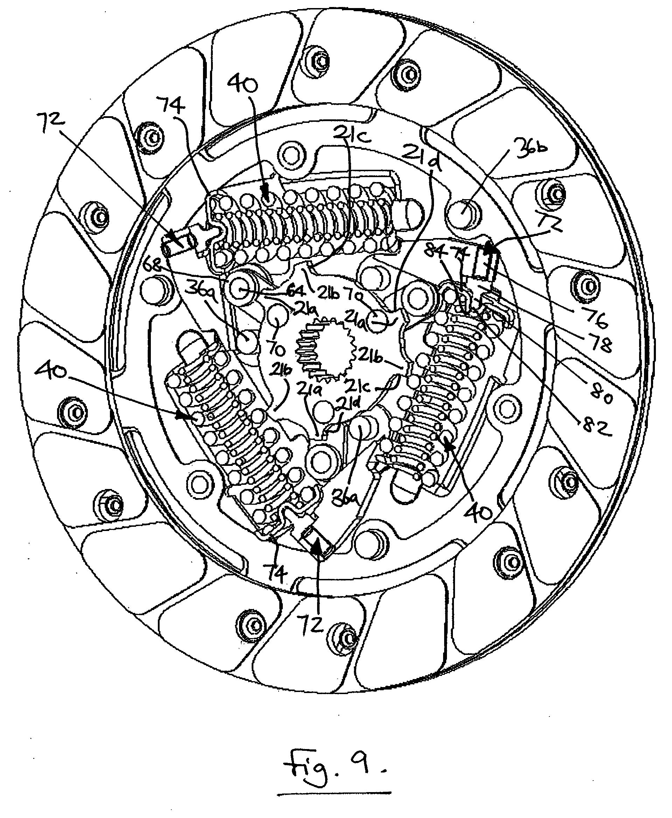

The first link member 44 has a spring abutment pin 72 which is arranged to act on a spring end cap 74 of an adjacent spring means 40 as can be seen best in Figure 9. In this embodiment, each spring means 40 comprises a pair of concentric coil springs 56, 58 located in aligned windows 39 in the side plates 30a, 30b. A spring end cap 74 engages one end of the coil springs and is retained in an enlarged portion 39a of the windows 39.

The spring abutment pin 72 has a threaded portion 76 which engages in a correspondingly threaded hole in the main body portion 44a of the first link member. A hexagonal portion 78 is provided on the pin 72 to enable easy assembly of the pin to the first link member. Extending from the hexagonal portion 78 in the opposite direction to the threaded portion is an abutment portion 80 having a curved end 82 for location in a correspondingly curved depression 84 in the centre of the spring end cap 74.

The spring abutment portion 80 of the abutment pin 72 is able to pivot relative to the spring end cap 74 as the first link member is pivoted relative to the side plates. This ensures that the springs 56, 58 remain square within their windows 39 and are not tilted by the linkages as the hub 12 rotates relative to the outer assembly 14 and the springs are compressed or released

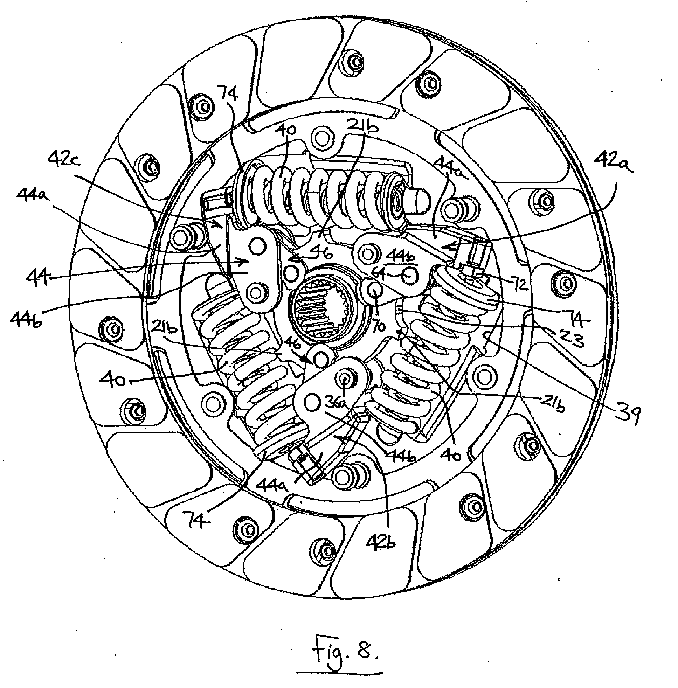

The arrangement of the linkages 42 is such that relative rotational movement between the hub 12 and the outer assembly 14 in any direction from the neutral position will pivot the first link members 44 in a clockwise direction, as viewed in Figure 8, to compress the coil springs 56, 58 in a manner similar to that already described above in relation to driven plate 10. Appropriate selection of the geometry of the linkages results in the springs being loaded non-linearly.

In order to limit the relative movement between the outer assembly and the hub, a number of stop lugs project radially form the radial flange 20 of the hub for co-operation with the rivets 36a about which the first link members 44 pivot. As can be seen best in Figure 9, in the present embodiment there are six stop lugs arranged in two sets of three which are denoted by the reference numerals 21a, 21b. The arrangement is such that a first stop surface 21 c on each of the lugs 21b contacts the rivet 36a immediately to the right, as viewed, of the respective lug 21 b to limit movement under drive conditions. A second stop surface 21d on each of the stop lugs 21a contacts the rivet 36a immediately to the left, as viewed, of the respective lug 21a to limit movement in overrun conditions.

Between immediately adjacent pair of stop lugs 21 a, 21 b is a curved surface 23 which provides clearance for the spacer 68 of an adjacent linkage as the linkage swings radially inwards as it nears its full travel in overrun

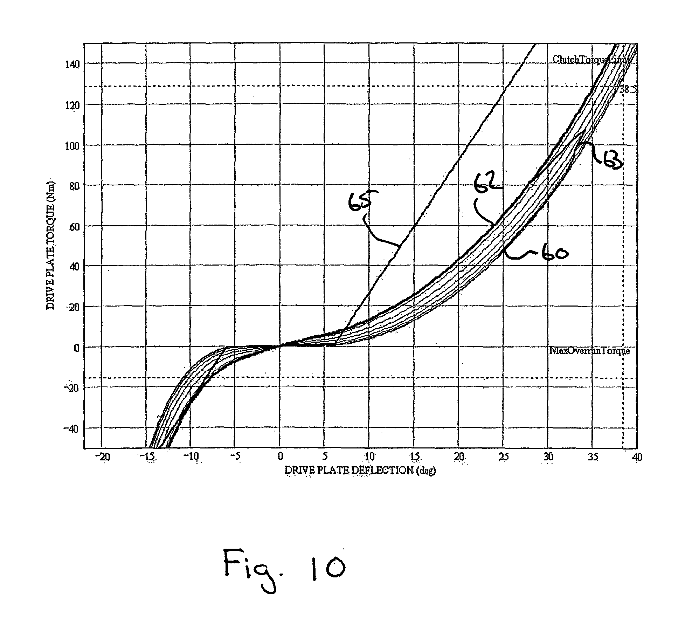

Figure 10 is a graph similar to that of Figure 5 but showing driven plate torque against deflection for the driven plate 10a. Line 60 shows the torque Vs deflection curve for the driven plate in the static condition whilst line 62 indicates the torque Vs deflection curve at a rotational speed of 6,500 rpm. Line 63 indicates the engine torque achievable at the respective engine speeds. The line 65 indicates a typical torque Vs deflection curve for a conventional driven plate.

It will be noted from this graph that the maximum overall torque of the driven plate in the static condition is achieved at a travel of 38 degrees in the drive direction and at about 14 degrees in overrun.

The damping characteristics of the driven plate 10a can be further modified in ways similar to those described above in relation to driven plate 10.

In this embodiment, lost motion can be introduced into the linkages by arranging for the spring end caps 74 to engage the ends 39b of the windows 39 as the drive plate approaches the neutral position. This will enable the spring abutment pins 72 to disengage from the spring end caps 74 to create a dead zone about the neutral position within which the linkages do not generate a damping torque.

Furthermore, it can be arranged that at least one of the pair of concentric coil springs 56, 58 has a pre-load when the spring end cap 74 is in abutment with the end 39b of the window. This will provide a step increase in the driven plate torque as the linkages begin to compress the springs.

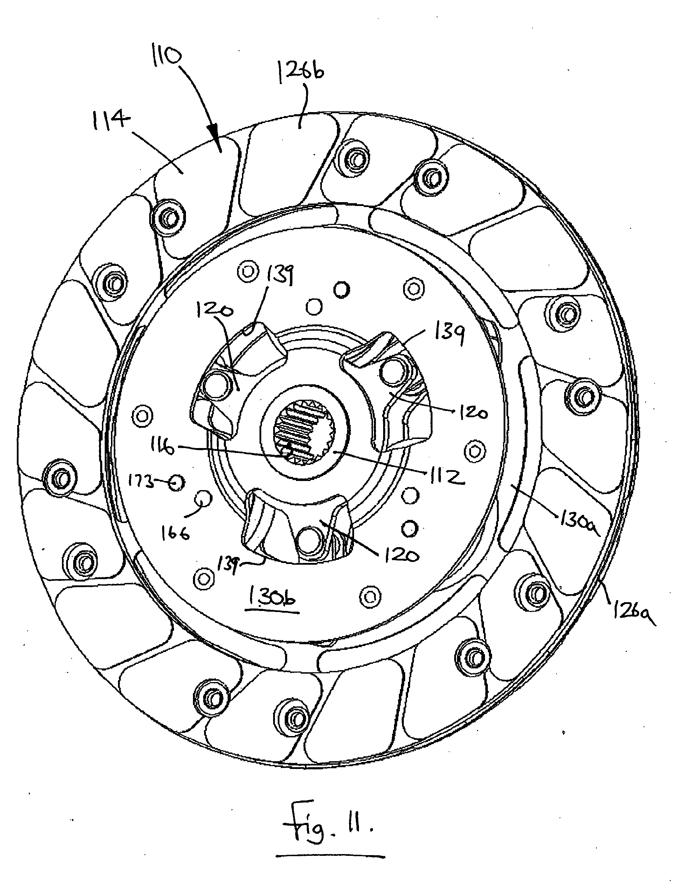

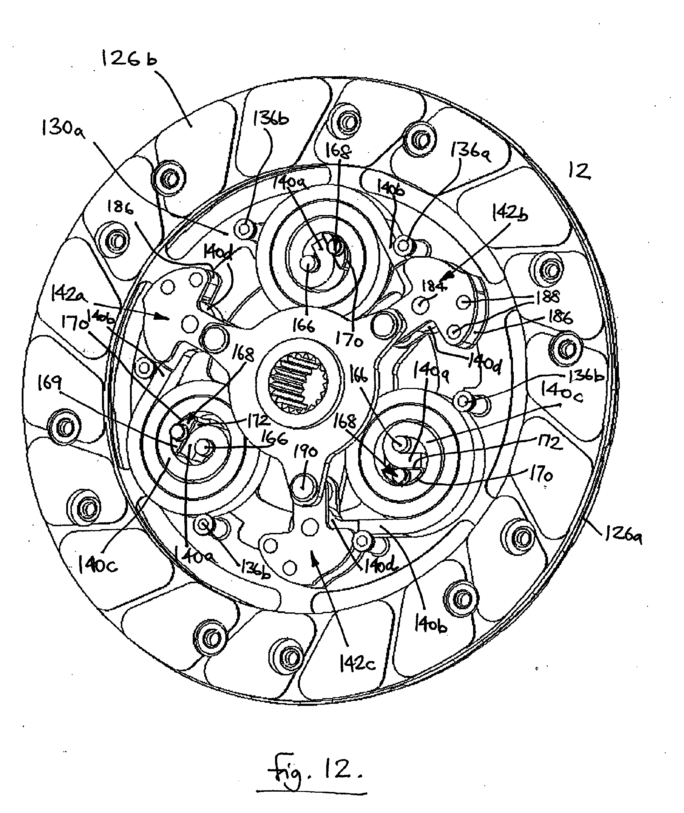

With reference to Figures 11 and 12 there is shown a third embodiment of a driven plate 100 in accordance with the invention. Similar reference numerals but increased by 100 are used to denote components of the driven plate 100 which serve the same function as those of the driven plate 10.

The driven plate 100 comprises a hub 112 and an outer assembly 114.

The hub 112 has a central bore with internal splines 116 for engagement with corresponding splines on a drive shaft (not shown) of an associated vehicle transmission. Two spaced radial flanges 118a, 118b are provided on the outer diameter of the hub. Each of the flanges has three equi-spaced radially extending lugs 120 which align with corresponding lugs on the other of the flanges.

The outer assembly 114, is similar to the outer assembly 14 and comprises a pair of annular friction linings 126a, 126b, spring segment 128, and a pair of side plates 130a, 130b. The side plates 130a, 130b are generally annular in shape and have an inner axial lip 138 for engagement with an outer diameter portion 122 of the hub. The side plates and the spring segment 128 are connected together by rivets 136a, 136b.

As with the previous embodiment, each side plate 130a, 130b has three circumferentially equi-spaced windows 139 which align with corresponding windows in the other side plate. However, in this embodiment, the aligned windows 139 do not receive a spring means but rather are arranged so that each window at least partially receives one of the radially extending lugs 120. To this end, the side plates are profiled at 166 to enable a radially inner portion of each side plate to engage an outer diameter portion 122 of the hub axially outside a respective flange 118a, 118b, whilst a radially outer portion of the side plate is in substantial axial alignment with the plane of the lugs 120 on its respective flange.

The hub 112 and the outer assembly 114 are interconnected by means of three linkages 142a, 142b, 142c. All of the linkages are the same and so only one will be described in detail.

The linkage 142a comprises a first link member in the form of a torsion spring 140 and a second link member 146 in the form of a bob weight.

The torsion spring 140 has a first end 140a which is held captive between a rivet 166, which extends between the side plates 130a, 130b, and a spring retention member 168. The spring retention member has a main body portion or lobe 169 which fits between the first end 140a of the spring and an adjacent coil 140c. As can be seen from Figure 12, the main body portion is generally in the shape of a semi-circle having a curved surface 170 and a flat edge 172. The flat edge 172 engages a flattened portion of the first end 140a of the spring, whilst the curved surface 170 is arranged to correspond to the inner surface of the adjacent coil 140c when the spring is fully tensioned. The curved surface 170 of the spring retention member helps to spread the contact load with the spring 140 reducing wear and fatigue.

The spring retention member is retained between the side plates by means of circular bosses 173 on either axial end of the main body portion 169 which engage in corresponding holes in their respective side plates 130a, 130b. The arrangement is such that the spring retention member 168 is able to pivot relative to the side plates to move with the spring 140 as it is tensioned and de-tensioned.

A second end 140b the torsion spring extends generally tangentially of the spring 140, in the neutral position, to form a trailing arm which engages with the second link member 146.

The second link member 146 comprises a pair of parallel spaced plate members 174, 176 which are of a generally T shape having a head portion 178 and tail portion 180. The head portion 178 of each plate member has a curved outer edge 182 which is profiled to ensure a clearance between it and an adjacent rivet 136a which connects the two side plates.

The plate members 174, 176 are connected in spaced apart relation by a rivet 184 at the junction of the head portions and the tail portions. A weight 186 is held between the head portions of the two plate members by two further rivets 188. The weight does not extend over the full width of the head portions 178 but occupies only one half of the width. This is to enable the trailing arm 140b to pass between the head portions as the hub rotates clockwise (as viewed) relative to the outer assembly when the driven plate is operating under drive conditions as will be described in more detail later.

The radially inner ends of the tail portions 180 are pivotably connected between two aligned radial lugs 120 on the hub by means of a rivet 190. A spacer 192 located about the rivet 190 is used to ensure the plate members 174, 176 remain substantially parallel.

The trailing arm 140b of the spring 140 has a narrow portion 194 which extends between the two plate members 174, 176 of the second link member 146. The end of the trailing arm 140b is curved into a hook 140d which hooks around the rivet 184 connecting the two plate members 174, 176.

Relative rotational movement between the hub 112 and the outer assembly 114 draws the second link member 146 radially inwardly so deflecting the trailing arm 140b of the torsion spring 140 radially inwardly against the bias of the spring. The geometry of the arrangement is such that initially, relative movement between the hub and the outer assembly result in a comparatively small deflection of the trailing arm 140b such that the loading on the spring is small. However, as the hub 112 rotates further relative to the outer assembly 114 from the neutral position, deflection of the trailing arm 140b increases non-linearly so that the loading on the spring means also increases non-linearly.

Under drive conditions, the hub 112 rotates clockwise (as viewed in Figure 12) relative to the outer assembly 114. During this movement, the second link member 146 is pivoted anti-clockwise (as viewed) relative to the trailing arm 140b of the spring 140. This results in the arm 140b passing between the head portions 178 of the plate members 174, 176, sufficient clearance being provided between the arm 140b and the weight 186 to ensure that the hub can rotate over its full permitted range.

The maximum range of movement of the hub 112 relative to the outer assembly 114 is limited by contact between the radial lugs 120 and ends 196, 198 of the windows 139 in the side plates 130a, 130b.

When the driven plate 110 is rotated at speed, centrifugal force acting on the second link member 146 will tend to move it radially outwardly. Thus, resistance to relative rotational movement between the hub 112 and the outer assembly 114 increases as the speed of rotation of the driven plate increases. The damping characteristics of the driven plate 110 are, therefore, sensitive to its speed of rotation. As with the driven plate 10, it will be appreciated that should this speed dependency not be required, the second link members 146 could be made of minimal mass.

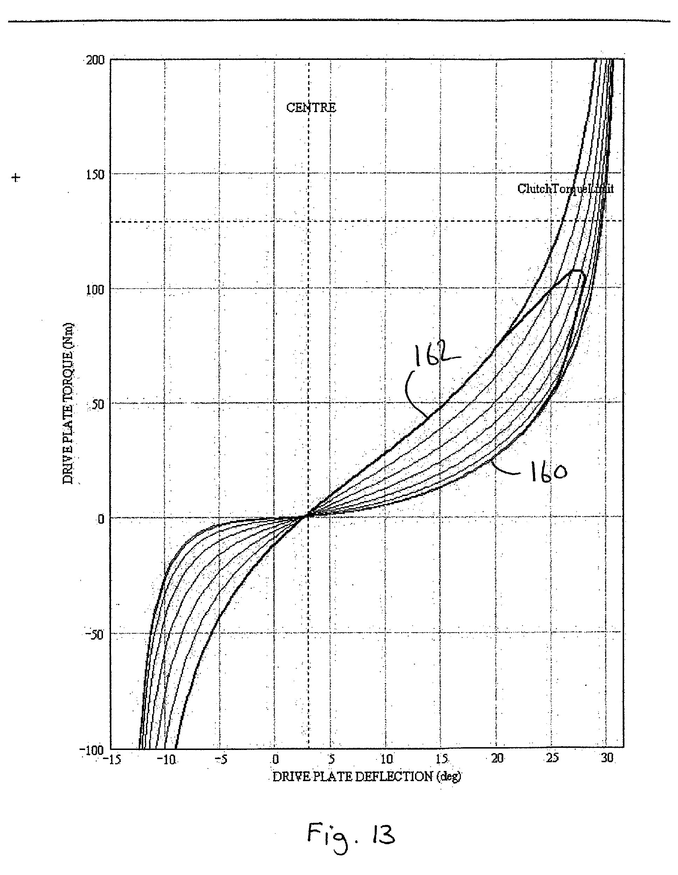

Figure 13 is a graph similar to that of Figure 5 and shows the characteristic curves for driven plate 110. Line 160 indicates the torque Vs deflection curve for the driven plate 110 when operated under static conditions, without the effects of centrifugal forces acting on the second link members 146. It will be noted that the loading on the springs 140 increases non-linearly with respect to deflection.

The line 162 indicates the torque Vs deflection curve for driven plate 110 when operated at approximately 6,500 rpm and shows how centrifugal forces acting on the second link members increases the torque required to deflect the hub 112 relative to the outer assembly 114.

It will be noted from Figure 13 that the neutral position, as indicated by the vertical dashed line, is offset to the right of the geometric centre position of torsion damper, as indicated by the 0 on the horizontal axis. This is due to the effects of weights 186 being offset to the right (as viewed in Figure 12) of the second link members 146. As a consequence, centrifugal forces acting on the weights 186 tends to deflect the linkage assemblies 142 slightly from their geometric centre positions when the driven plate is rotated, even when there is no load on the plate.

The damping characteristics of the driven plate 110 can be modified, for example, by introducing a limited amount of lost motion so that no damping torque is produced by the linkages over an initial range of relative movement between the hub 112 and the outer assembly 114. This could be achieved by arranging for the trailing arms 140b to engage an adjacent one of the rivets 136a when the driven plate is in the neutral position, and providing a limited amount of free play in the connection between the end of the trailing arm 140b and the rivet 184 on the second link member. In this arrangement, no pivotal movement of the trailing arm 140b would take place until the free play was taken up.

As discussed with respect to the driven plate 10, those skilled in the art will also understand that a friction damping device operative between the hub 112 and the outer assembly 114 could be provided if required.

Whilst the invention has been described and claimed in relation to a driven plate for a friction clutch, those skilled in the art will appreciate that the torsion damper arrangement disclosed can be applied generally to any torsion damper having an input member and an output member arranged for limited relative rotation against the action of a spring means.

For example, the invention could be applied to a twin mass flywheel having an input mass and output mass adapted for limited relative rotational movement, the flywheel further comprising spring means for resisting the relative rotational movement between the input and output masses, the arrangement being such that, in use, the loading on the spring means changes non-linearly as the masses rotate relative to one another.

## Claims

1. A driven plate (10) for a friction clutch, the driven plate comprising a hub (12), and an outer assembly (14) carrying at least one friction lining (26a, 26b) arranged concentrically about the axis of rotation (15) of the hub, the hub being capable of limited rotational movement relative to the outer assembly and the driven plate further comprising spring means (40) for resisting said relative rotational movement between the hub and the outer assembly, the driven plate being **characterised in that** the loading on the spring means (40) changes non-linearly as the hub (12) rotates relative to the outer assembly (14).

2. A driven plate as claimed in claim 1, **characterised in that** the outer assembly and the hub are connected by means of at least one linkage (42a, 42b, 42c).

3. A driven plate as claimed in claim 2, **characterised in that** the spring means comprises at least one spring (40) associated with the or each linkage (42a, 42b, 42c).

4. A driven plate as claimed in claim 3, **characterised in that** said relative rotational movement between the hub (12) and the outer assembly (14) causes the or each linkage (42a, 42b, 42c) to act on its respective spring (40), changing the spring loading.

5. A driven plate as claimed in any one of claims 2 to 4, **characterised in that** the or each linkage comprises a first link member (44) pivotably connected to the outer assembly and a second link member (46) pivotably connected to the first link member and to the hub.

6. A driven plate as claimed in claim 5, **characterised in that** at least one of the first (44) and second (46) link members has a significant mass, the arrangement being such that, when the driven plate (10) is rotated in use, centrifugal force acting on said at least one of the first and second link members tends to resist said relative rotational movement between the hub (12) and the outer assembly (14).

7. A driven plate as claimed in any one of claims 2 to 6 **characterised in that** the spring means comprises at least one coil spring (40) associated with the or each linkage (42a, 42b, 42c).

8. A driven plate as claimed in claim 7, **characterised in that** the or each coil spring (40) is compressed by its respective linkage (42a, 42b, 42c) in response to said relative rotational movement between the hub (12) and the out assembly (14) away from a neutral position.

9. A driven plate as claimed in claim 8 when dependent on claim 5 **characterised in that** one end of the or each coil spring (40) contacts an abutment (54) on the outer assembly (14), the outer end of the or each coil spring being acted upon by an abutment (52) on the first link member (44) such that pivotal movement of the first link member in response to said relative rotational movement between the hub (12) and the outer assembly (14) away from a neutral position compress the or each coil spring (40).

10. A driven plate as claimed in claim 9 **characterised in that** said other end of the or each coil spring is received within a spring retention means (52) provided on the first link member (44).

11. A driven plate as claimed in claim 9 **characterised in that** a spring end cap (74) is provided in engagement with said other end of the or each coil spring (40), an abutment means (72) on the first link member (44a) contacting the spring cap member.

12. A driven plate as claimed in claim 11 **characterised in that** the abutment means (72) on the first link member (44a) is adapted to pivot relative to the spring end cap (74) as the first link member pivots in response to said relative rotational movement between the hub (12) and the outer assembly (14) away from a neutral position.

13. A driven plate as claimed in claim 12 **characterised in that** the abutment means (72) on the first link member comprises a pin having a rounded end (82) adapted for engagement with a correspondingly rounded depression (84) in the spring end cap (74).

14. A driven plate as claimed in any one of claims 11 to 13 **characterised in that** said spring end cap (74) is adapted to engage a further abutment (39a) of the outer assembly when the driven plate is at or near the neutral position.

15. A driven plate as claimed in any one of claims 7 to 14 **characterised in that** two concentrically mounted coil springs (56, 58) are associated with the or each linkage (42a, 42b, 42c).

16. A driven plate as claimed in claim 15 **characterised in that** only one (56) of the concentrically mounted coil springs is compressed by its respective linkage over an initial range of relative rotational movement between the hub (12) and the outer assembly (14) away from a neutral position, both coil springs (56, 58) being compressed if said relative movement exceeds the initial range.

17. A driven plate as claimed in any one of claims 2 to 6 **characterised in that** the spring means comprises a torsion spring (140) associated with the or each linkage(42a, 42b, 42c).

18. A driven plate as claimed in claim 17, when dependent on claim 5, **characterised in that** one end (140b) of the torsion spring (140) comprises the first link member of its respective linkage, the other end (140a) of the torsion spring being attached to the outer assembly (114).

19. A driven plate as claimed in claim 18 **characterised in that** said relative rotational movement between the hub (112) and the outer assembly (114) away from a neutral position deflects said one end (140b) of the torsion spring (140) to load the spring.

20. A driven plate as claimed in any one of claims 2 to 16 **characterised in that** torque can be transmitted in parallel between the hub (112) and the outer assembly (114) via the spring means (40) and the linkage (42a,. 42b, 42c).

21. A driven plate as claimed in claim 20 **characterised in that** the or each linkage (42a, 42b, 42c) is adapted to transmit all the torque between the outer assembly (14) and the hub (12) when the hub is at or near the limit of its rotational movement relative to the outer assembly.

22. A driven plate as claimed in any one of claims 2 to 21 **characterised in that** the or each linkage (42a, 42b, 42c) has a limited amount of lost motion such that, in use, no resistance to the relative movement between the hub (12) and the outer assembly (14) is generated by the linkage and/or the spring means (40) over an initial range of said relative movement until the lost motion is taken up.

23. A driven plate as claimed in any one of the claims 1 to 22 **characterised in that** relative rotation between the hub (12) and the outer assembly (14) is resisted by a friction damping device.
